# EUROPÄISCHE PATENTSCHRIFT

(11) **EP 4 113 727 B1**
(45) Veröffentlichungstag und Bekanntmachung des Hinweises auf die Patenterteilung: **22.10.2025**
(21) Anmeldenummer: 22020156.0
(22) Anmeldetag: 10.06.2022
(51) Int. Cl.: H01M 50/325, H01M 50/358, H01M 50/35

(54) **BATTERIE**
BATTERY
BATTERIE

(30) Priorität: 30.06.2021 DE 102021116769
(43) Veröffentlichungstag der Anmeldung: 04.01.2023
(73) Patentinhaber: Dr. Ing. h.c. F. Porsche Aktiengesellschaft, 70435 Stuttgart (DE)
(72) Erfinder: Renz, Fadi, 70806 Kornwestheim (DE)

(56) Entgegenhaltungen:
- EP-A1- 2 760 075
- DE-A1- 102008 034 879
- DE-A1- 102011 015 926

## Beschreibung

Die Erfindung betrifft eine Fluidablaufanordnung, eine Batterieanordnung und ein Fahrzeug.

Die DE 10 2013 014 903 A1 zeigt eine Batterie mit flüssigkeitsgekühlten Einzelzellen, bei der die Wandung des Batteriegehäuses eine Sollbruchstelle aufweist, die ein Austreten von Kühlmittel aus dem Batteriegehäuse ermöglicht.

Die DE 10 2013 212 859 B4 zeigt ein Batteriesystem, bei dem im Falle einer Bildung von Wasserkondensat ein Fahrer informiert wird, und bei einer Detektion einer wässrigen Lösung mit Kühlmittel werden Ventile aktiviert.

Die KR 10 2020 0 041 007 A zeigt ein Batteriepack mit einem Kühlströmungswegverbinder, einem Verbindungsströmungsweg und einer Kühlwasserentladungseinheit.

Die US 2018 / 0 238 764 A1 zeigt ein Batteriepack mit einer Feuchtigkeitssammeleinheit und einer Feuchtigkeitsauslasseinheit.

Die DE 10 2011 015 926 A1 zeigt ein Batteriesystem mit einem Gehäuse, einem Sammelbereich, einer Ventileinrichtung und einem Steinschlagschutzelement. Die Ventileinrichtung hat einen Ventilträger und einen elastischen Dichtabschnitt, der nur öffnet und eine Entwässerung ermöglicht, wenn ein Mindestwasserdruck bzw. eine vorgegebene Wassersäule anliegt. Die Ventileinrichtung ist zwischen dem Sammelbereich und dem Steinschlagschutzelement angeordnet.

Die DE 10 2008 034 879 A1 zeigt eine Batteriegehäuse, das eine Öffnung zur Verringerung eines Innendrucks aufweist.

Die EP 2 760 075 A1 zeigt ein Batteriesystem mit einem Gehäuse, welches eine Gehäuseöffnung für einen Gasaustausch aufweist.

Es ist daher eine Aufgabe der Erfindung, eine neue Fluidablaufanordnung, eine neue Batterieanordnung und ein neues Fahrzeug bereit zu stellen.

Diese Aufgabe wird gelöst durch den Gegenstand des unabhängigen Anspruchs 1.

Gemäß einer bevorzugten Ausführungsform weist die Fluidablaufanordnung ein Bodenelement für eine Batterieanordnung auf, welches Bodenelement wannenförmig ist und eine Ablaufschräge für ein Kühlmittel aufweist, und welche Ablaufschräge in Fluidverbindung mit der Sammelkammer steht, um einen Ablauf eines Kühlmittels von der Batterieanordnung zur Sammelkammer zu ermöglichen. Die Ablaufschräge ermöglicht einen kontrollierten Ablauf des Kühlmittels in der Fluidablaufvorrichtung.

Gemäß einer bevorzugten Ausführungsform steht die Ablaufschräge über einen Schlauch in Fluidverbindung mit der Sammelkammer. Schläuche haben den Vorteil, dass sie einfach montiert werden können und ggf. auch elastisch ausgebildet werden können, um kurzzeitig auftretende hohe Drücke zu verringern.

Gemäß einer bevorzugten Ausführungsform ist der Schlauch über mindestens eine Schelle befestigt. Schellen ermöglichen stabile Verbindungen, auch unter extremen Bedingungen mit starken Erschütterungen.

Gemäß einer bevorzugten Ausführungsform weist die Fluidablaufanordnung ein Labyrinthkammerteil und ein Deckelteil auf, welches Labyrinthkammerteil die Labyrinthkammer ausbildet, welches Deckelteil in einem Deckelteilfortsatz die Sammelkammer ausbildet, und welches Deckelteil mit dem Labyrinthkammerteil verbunden ist. Dies erleichtert die Herstellung der Labyrinthkammer und der Sammelkammer.

Gemäß einer bevorzugten Ausführungsform ist ein Dichtelement zwischen dem Labyrinthkammerteil und dem Deckelteil vorgesehen. Hierdurch wird der Austritt von Kühlmittel an der Verbindungsstelle verhindert.

Gemäß einer bevorzugten Ausführungsform weist die Fluidablaufanordnung zumindest bereichsweise mindestens einen Werkstoff auf aus der Werkstoffgruppe bestehend aus:
- Kunststoff,
- Aluminium, und
- Aluminiumlegierung.

Diese Werkstoffe sind leicht und können das Kühlmittel gut leiten.

Gemäß einer bevorzugten Ausführungsform weist die Labyrinthkammer eine Seitenwand, einen Labyrinthinnenraum und Formelemente auf, welche Formelemente sich von der Seitenwand in den Labyrinthinnenraum hinein erstrecken, um einen geradlinigen Durchfluss eines Fluids durch die Labyrinthkammer zu verhindern oder zumindest zu verringern. Dies ermöglicht einerseits einen Austritt des Kühlmittels, erschwert aber andererseits einen direkten Eintritt eines Fluids von außen in die Batterieanordnung hinein.

Gemäß einer bevorzugten Ausführungsform nähern sich die Formelemente zumindest teilweise zumindest abschnittsweise bei ihrer Erstreckung von der Seitenwand in den Labyrinthinnenraum hinein dem Fluidauslass an. Bei einer bevorzugten Anordnung des Fluidauslasses unterhalb des Fluideinlasses kann beispielsweise ein Kühlmittel gut zum Fluidauslass fließen, ein flüssiges Medium wird dagegen daran gehindert, in umgekehrter Richtung zu fließen. Zudem wird es für Tiere schwieriger, in die Labyrinthkammer hinein zu kriechen.

Gemäß einer bevorzugten Ausführungsform sind die Formelemente zumindest teilweise zumindest abschnittsweise flächig ausgebildet. Die flächige Ausbildung ist gut dazu geeignet, einen starken direkten Fluidfluss durch die Labyrinthkammer zu unterbinden.

Eine Batterieanordnung weist eine solche Fluidablaufanordnung auf. Dies verringert die Gefahr, dass es bei einer Störung oder Zerstörung des Kühlsystems der Batterieanordnung durch das Kühlmittel zu einem Kurzschluss und damit zu einem größeren Schaden wie einem Brand am Fahrzeug kommt. Der Aufbau einer Kühlmittelsäule in der Batterieanordnung kann verhindert werden.

Ein Fahrzeug weist eine solche Batterieanordnung auf. Bei Fahrzeugen ist die Sicherheit wichtig, und die Fluidablaufanordnung erhöht die Sicherheit.

Gemäß einer bevorzugten Ausführungsform steht der Fluidauslass in Fluidverbindung mit der Umgebung des Fahrzeugs, um einen Ablauf eines Kühlmittels in die Umgebung des Fahrzeugs zu ermöglichen. Dies führt zu einer guten Trennung des Kühlmittels von der Batterieanordnung und verringert die Gefahr eines Kurzschlusses. Als Kühlmittel bzw. für einen guten Wärmetransport werden häufig Wasser-Glykol-Gemische eingesetzt, und ein Ablassen eines solchen Gemischs in einem Schadensfall ist möglich.

Gemäß einer bevorzugten Ausführungsform ist die Sammelkammer zumindest bereichsweise oberhalb der Labyrinthkammer angeordnet. Dies erleichtert den Ablauf des Kühlmittels in einem Schadensfall.

Weitere Einzelheiten und vorteilhafte Weiterbildungen der Erfindung ergeben sich aus den im Folgenden beschriebenen und in den Zeichnungen dargestellten, in keiner Weise als Einschränkung der Erfindung zu verstehenden Ausführungsbeispielen sowie aus den Unteransprüchen. Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Es zeigt:
Fig. 1 in einem Längsschnitt ein Ausführungsbeispiel einer Fluidablaufanordnung,
Fig. 2 in einer raumbildlichen Darstellung eine Membran der Fluidablaufanordnung von Fig. 1,
Fig. 3 in einem Längsschnitt ein weiteres Ausführungsbeispiel einer Fluidablaufanordnung,
Fig. 4 in einer raumbildlichen Darstellung eine Membran der Fluidablaufanordnung von Fig. 3,
Fig. 5 in einem Teil-Längsschnitt eine Batterieanordnung mit der Fluidablaufanordnung von Fig. 1,
Fig. 6 in einem Teil-Längsschnitt eine Batterieanordnung mit der Fluidablaufanordnung von Fig. 3, und
Fig. 7 in schematischer Darstellung ein Fahrzeug mit einer Batterieanordnung.

Im Folgenden sind gleiche oder gleich wirkende Teile mit den gleichen Bezugszeichen versehen und werden üblicherweise nur einmal beschrieben. Die Beschreibung ist figurenübergreifend aufeinander aufbauend, um unnötige Wiederholungen zu vermeiden.

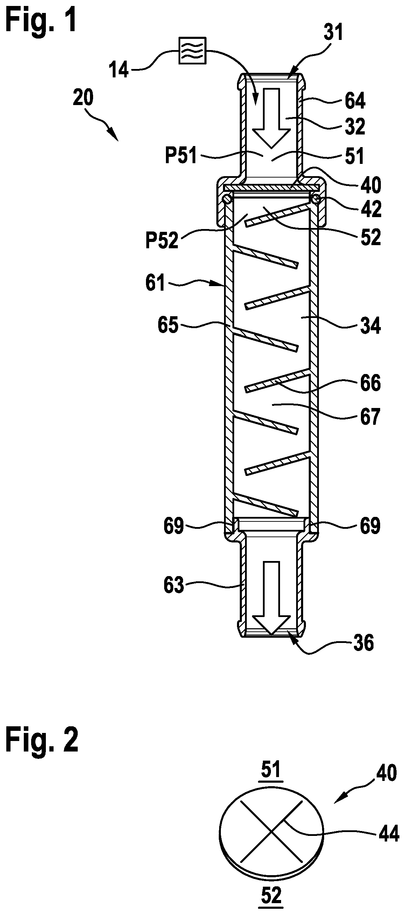

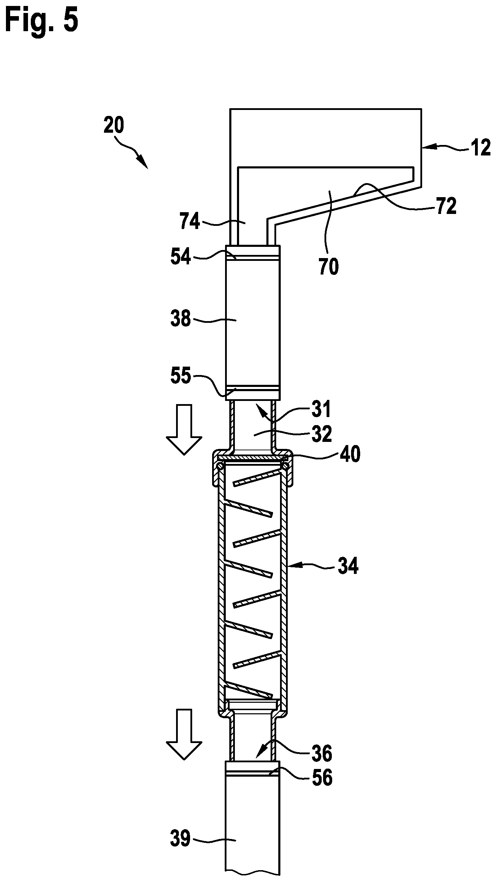

**Fig. 1** zeigt eine Fluidablaufanordnung 20 für eine Batterieanordnung 12, wie sie bspw. in Fig. 5 dargestellt ist. Die Fluidablaufanordnung 20 hat einen Fluideinlass 31, eine Sammelkammer 32, eine Membran 40, eine Labyrinthkammer 34 und einen Fluidauslass 36.

Die Membran 40 ist zwischen der Sammelkammer 32 und der Labyrinthkammer 34 vorgesehen. In einem geschlossenen Zustand Z1 ist die Membran 40 dazu eingerichtet, ein Kühlmittel 14, welches über den Fluideinlass 31 in die Sammelkammer 32 gelangt, in der Sammelkammer 32 zu sammeln.

Sobald ein vorgegebener erster Differenzdruck P51 - P52 zwischen einer der Sammelkammer 32 zugeordneten Seite 51 der Membran 40 mit dem Druck P51 und einer der Labyrinthkammer 34 zugeordneten Seite 52 der Membran 40 mit dem Druck P52 vorliegt, wechselt die Membran 40 von einem geschlossenen Zustand Z1 in einen geöffneten Zustand Z2, und das Kühlmittel aus der Sammelkammer 32 kann über die Labyrinthkammer 34 zum Fluidauslass 36 abfließen. Der vorgegebene erste Differenzdruck kann beispielsweise 0,1 bar, 0,3 bar oder 0,5 bar betragen. Er liegt bevorzugt im Bereich 0,1 bar bis 1,0 bar, weiter bevorzugt im Bereich 0,2 bar bis 0,9 bar.

Die Fluidablaufanordnung 20 hat ein Labyrinthkammerteil 61 und ein Deckelteil 62.

Das Deckelteil 62 bildet in einem Deckelteilfortsatz 64 die Sammelkammer 32 aus, und das Deckelteil 62 ist mit dem Labyrinthkammerteil 61 verbunden, beispielsweise durch eine Klebeverbindung oder durch eine Schraubverbindung.

Diese Ausbildung ermöglicht auch eine einfache Montage der Membran 40 zwischen der Sammelkammer 32 und der Labyrinthkammer 34.

Zwischen dem Labyrinthkammerteil 61 und dem Deckelteil 62 ist ein Dichtelement 42 vorgesehen. Das Dichtelement 42 kann bspw. ein O-Ring oder eine Lippendichtung sein.

Ein unteres Deckelteil 63 ist mit dem Labyrinthkammerteil 61 verbunden, und das Deckelteil 63 bildet den Fluidauslass 36 aus. Das Deckelteil 63 ist bspw. über eine Klebeverbindung 69 mit dem Labyrinthkammerteil 61 verbunden, es kann aber auch eine andere Verbindung gewählt werden, beispielsweise eine Schraubverbindung.

Die Labyrinthkammer 34 hat eine Seitenwand 65, einen Labyrinthinnenraum 67 und Formelemente 66. Die Formelemente 66 erstrecken sich von der Seitenwand 65 in den Labyrinthinnenraum 67 hinein. Hierdurch wird ein geradliniger Durchfluss des Kühlmittels 14 bzw. allgemein eines Fluids durch die Labyrinthkammer 34 verhindert oder zumindest verringert.

Die Formelemente 66 nähern sich zumindest teilweise zumindest abschnittsweise bei ihrer Erstreckung von der Seitenwand 65 in den Labyrinthinnenraum 67 hinein dem Fluidauslass 36 an. Anders ausgedrückt ragen die Formelemente 66 bei der Anordnung entsprechend Fig. 1 zumindest teilweise zumindest abschnittsweise nach unten zum Fluidauslass 36 hin bzw. sie sind in diese Richtung geneigt. Hierdurch kann das Kühlmittel 14 gut zum Fluidauslass 36 hin abfließen, ein Fluss eines Fluids in die umgekehrte Richtung wird jedoch erschwert.

Die Formelemente 66 sind bevorzugt zumindest teilweise zumindest abschnittsweise flächig ausgebildet. Sie können bspw. wie ein Sprungbrett in den Labyrinthinnenraum 67 hineinragen, sie können aber auch bis zu ihrem freien Ende lateral mit der Seitenwand 65 verbunden sein.

Ein weiterer Vorteil der Labyrinthkammer 34 besteht darin, dass ein Eindringen von Tieren vom Fluidauslass 36 zum Fluideinlass 31 und ggf. hinein in die Batterieanordnung durch die Ausgestaltung des Labyrinthinnenraums 67 verhindert oder zumindest erschwert wird. Insbesondere Marder und andere Tiere der taxonomischen Unterordnung der Hundeartigen können durch die Labyrinthkammer 34 von einem Eindringen in die Hochvoltbatterie abgehalten werden.

Die Fluidablaufanordnung 20 weist bevorzugt zumindest bereichsweise mindestens einen Werkstoff auf aus der Werkstoffgruppe bestehend aus:
- Kunststoff,
- Aluminium, und
- Aluminiumlegierung.

Dabei handelt es sich um leichte und trotzdem stabile Werkstoffe, die besonders gut geeignet sind.

**Fig. 2** zeigt eine Ausführungsform der Membran 40 von Fig. 1. Die Membran 40 hat zwei in Kreuzform angeordnete Sollreißstellen 44, welche bei einem vorgegebenen Differenzdruck zwischen der Oberseite und Unterseite der Membran 40 aufreißen und einen Fluidfluss durch die Membran 40 ermöglichen. Die Sollreißstellen 44 können auch als Sollbruchstellen bezeichnet werden. Die Membran 40 kann bei einer solchen Ausbildung bspw. aus einem Kunststoff oder aus einem dünnen Blech ausgebildet sein. Durch das Aufreißen kann die Membran 40 nicht mehr vom geöffneten Zustand Z2 in den geschlossenen Zustand Z1 übergehen, der Übergang vom geschlossenen Zustand Z1 in den geöffneten Zustand Z2 ist also irreversibel, und die Membran 40 wird zerstört. In einem solchen Fall kann die Membran 40 bspw. in einer Werkstatt ausgetauscht werden.

Die Membran 40 öffnet sich beispielsweise auch bei einem in der Batterieanordnung 12 durch Entgasung entstehenden Überdruck. Ein solcher Überdruck kann beispielsweise bei einer Beschädigung der Batterieanordnung entstehen.

Die Membran 40 hat im Ausführungsbeispiel eine runde Grundform oder bspw. die Grundform einer Ellipse.

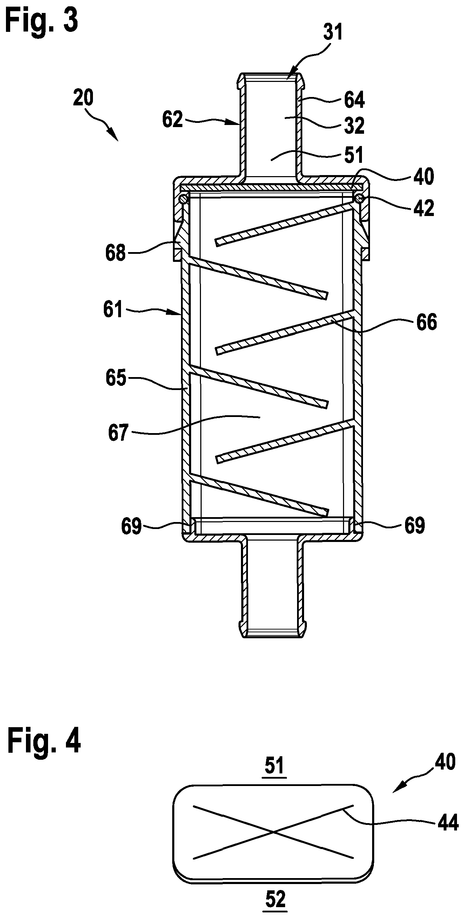

**Fig. 3** zeigt ein weiteres Ausführungsbeispiel der Fluidablaufanordnung 20. Die grundsätzliche Funktionsweise entspricht der Funktionsweise der Fluidablaufanordnung 20 von Fig. 1. Im Unterschied zur Ausführungsform von Fig. 1 ist die Labyrinthkammer 34 breiter ausgebildet relativ zur Höhe der Labyrinthkammer 34. Das Labyrinthkammerteil 61 ist mit dem Deckelteil 62 über eine Rastverbindung 68 verbunden, und dies erleichtert den Austausch der Membran 40.

Anders als beim Ausführungsbeispiel von Fig. 1 hat die Labyrinthkammer 34 einen viereckigen Querschnitt.

**Fig. 4** zeigt eine weitere Ausführungsform der Membran 40 für die Fluidablaufanordnung 20 von Fig. 3. Passend zum Querschnitt der Labyrinthkammer 34 von Fig. 3 hat die Membran 40 eine viereckige Form mit abgerundeten Ecken.

**Fig. 5** zeigt eine Batterieanordnung 12 mit der daran befestigten Fluidablaufanordnung 20. Die Batterieanordnung 12 ist bevorzugt eine Traktionsbatterie bzw. eine Hochvolt-Batterieanordnung.

Die Fluidablaufanordnung 20 hat ein Bodenelement 70 für den Bodenbereich der Batterieanordnung 12. Das Bodenelement 70 ist wannenförmig ausgebildet, und es hat eine Ablaufschräge 72 für das Kühlmittel 14. Die Ablaufschräge 72 steht über einen Ablauf 74 in Fluidverbindung mit der Sammelkammer 32, um einen Ablauf des Kühlmittels 14 von der Batterieanordnung 12 zur Sammelkammer 32 zu ermöglichen. Das Kühlmittel 14 kann bspw. in das Bodenelement 70 und damit zur Sammelkammer 32 gelangen, wenn eine Leckage im Kühlmittelkreislauf der Batterieanordnung 12 auftritt. Dies kann bspw. bei einer Beschädigung durch einen Unfall oder beim Auftreten einer undichten Stelle der Fall sein.

Die Ablaufschräge 72 steht über einen Schlauch 38 in Fluidverbindung mit der Sammelkammer 32. Der Auslass 36 steht über einen Schlauch 39 bspw. in Fluidverbindung mit der Umgebung eines Fahrzeugs, er kann bspw. im Bereich des Unterbodens des Fahrzeugs enden. Die Schläuche 38, 39 sind bevorzugt über Schellen 54, 55 bzw. 56 befestigt.

Die gesamte Fluidablaufanordnung 20 kann für die Montage vergleichsweise einfach zusammengesteckt bzw. montiert werden.

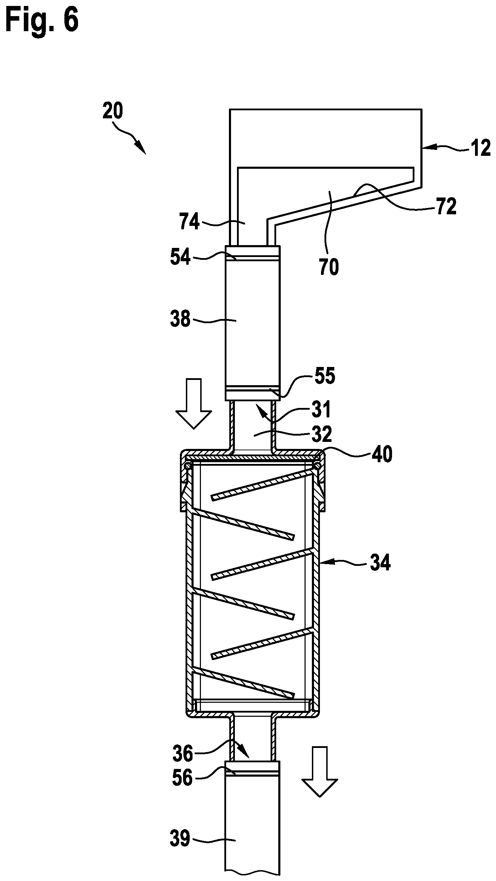

**Fig. 6** zeigt eine entsprechende Ausführungsform mit der Batterieanordnung 12 und der Fluidablaufanordnung 20 von Fig. 3.

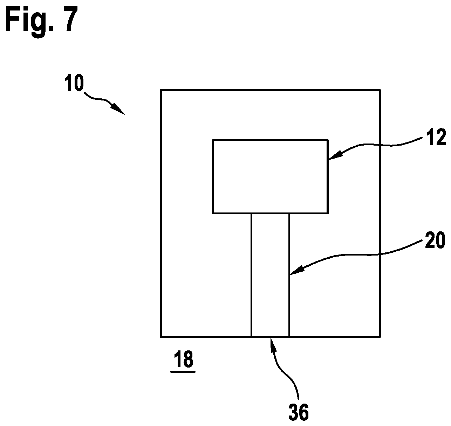

**Fig. 7** zeigt ein Fahrzeug 10, welches die Batterieanordnung 12 mit der Fluidablaufanordnung 20 aufweist. Der Fluidauslass 36 steht hierbei bevorzugt in Fluidverbindung mit der Umgebung 18 des Fahrzeugs 10, um einen Abfluss bzw. Ablauf des Kühlmittels 14 in die Umgebung des Fahrzeugs 10 zu ermöglichen.

Naturgemäß sind im Rahmen der vorliegenden Erfindung vielfältige Abwandlungen und Modifikationen möglich.

Die Fluidablaufanordnung 20 wird bevorzugt derart angeordnet, dass der Fluidauslass 36 unterhalb von der Sammelkammer 32 ist, um einen guten Ablauf oder Abfluss durch die Schwerkraft zu ermöglichen. Es ist allerdings auch möglich, die Fluidablaufanordnung 20 in einer anderen Lage anzuordnen und nur im Bedarf wie zuvor genannt auszurichten.

Der Fluideinlass 31 und der Fluidauslass 36 können durch Verlängerungselemente wie die Schläuche 38, 39 oder das Bodenelement 70 weiter entfernt von der Labyrinthkammer 34 vorgesehen werden.

Die Fluidablaufanordnung 20 hat ein Bodenelement 70 für den Bodenbereich der Batterieanordnung 12. Das Bodenelement 70 ist wannenförmig ausgebildet, und es hat eine Ablaufschräge 72 für das Kühlmittel 14. Die Ablaufschräge 72 steht über einen Ablauf 74 in Fluidverbindung mit der Sammelkammer 32, um einen Ablauf des Kühlmittels 14 von der Batterieanordnung 12 zur Sammelkammer 32 zu ermöglichen. Das Kühlmittel 14 kann bspw. in das Bodenelement 70 und damit zur Sammelkammer 32 gelangen, wenn eine Leckage im Kühlmittelkreislauf der Batterieanordnung 12 auftritt. Dies kann bspw. bei einer Beschädigung durch einen Unfall oder beim Auftreten einer undichten Stelle der Fall sein.

Die Ablaufschräge 72 steht über einen Schlauch 38 in Fluidverbindung mit der Sammelkammer 32. Der Auslass 36 steht über einen Schlauch 39 bspw. in Fluidverbindung mit der Umgebung eines Fahrzeugs, er kann bspw. im Bereich des Unterbodens des Fahrzeugs enden. Die Schläuche 38, 39 sind bevorzugt über Schellen 54, 55 bzw. 56 befestigt.

Die gesamte Fluidablaufanordnung 20 kann für die Montage vergleichsweise einfach zusammengesteckt bzw. montiert werden.

**Fig. 6** zeigt eine entsprechende Ausführungsform mit der Batterieanordnung 12 und der Fluidablaufanordnung 20 von Fig. 3.

**Fig. 7** zeigt ein Fahrzeug 10, welches die Batterieanordnung 12 mit der Fluidablaufanordnung 20 aufweist. Der Fluidauslass 36 steht hierbei bevorzugt in Fluidverbindung mit der Umgebung 18 des Fahrzeugs 10, um einen Abfluss bzw. Ablauf des Kühlmittels 14 in die Umgebung des Fahrzeugs 10 zu ermöglichen.

Naturgemäß sind im Rahmen der vorliegenden Erfindung vielfältige Abwandlungen und Modifikationen möglich.

Die Fluidablaufanordnung 20 wird bevorzugt derart angeordnet, dass der Fluidauslass 36 unterhalb von der Sammelkammer 32 ist, um einen guten Ablauf oder Abfluss durch die Schwerkraft zu ermöglichen. Es ist allerdings auch möglich, die Fluidablaufanordnung 20 in einer anderen Lage anzuordnen und nur im Bedarf wie zuvor genannt auszurichten.

Der Fluideinlass 31 und der Fluidauslass 36 können durch Verlängerungselemente wie die Schläuche 38, 39 oder das Bodenelement 70 weiter entfernt von der Labyrinthkammer 34 vorgesehen werden.

## Patentansprüche

1. Fluidablaufanordnung (20) für eine Batterieanordnung (12), welche Fluidablaufanordnung (20) einen Fluideinlass (31), eine Sammelkammer (32), eine Membran (40), eine Labyrinthkammer (34) und einen Fluidauslass (36) aufweist, welche Membran (40) zwischen der Sammelkammer (32) und der Labyrinthkammer (34) vorgesehen ist und einen geschlossenen Zustand (Z1) und einen geöffneten Zustand (Z2) aufweist, und welche Membran (40) dazu ausgebildet ist, im geschlossenen Zustand (Z1) ein Kühlmittel (14), welches über den Fluideinlass (31) in die Sammelkammer (32) gelangt, in der Sammelkammer (32) zu sammeln, bis die Membran (40) bei einem vorgegebenen ersten Differenzdruck zwischen einer der Sammelkammer (32) zugeordneten Seite (51) der Membran (40) und einer der Labyrinthkammer (34) zugeordneten Seite (52) der Membran (40) vom geschlossenen Zustand (Z1) in den geöffneten Zustand (Z2) übergeht und einen Ablauf des Kühlmittels (14) über die Labyrinthkammer (34) zum Fluidauslass (36) ermöglicht, **dadurch gekennzeichnet, dass** die Membran (40) dazu ausgebildet ist, nach dem Übergang vom geschlossenen Zustand (Z1) in den geöffneten Zustand (Z2) nicht mehr in den geschlossenen Zustand (Z1) überzugehen, wobei dies durch Zerstörung der Membran erreicht wird.

2. Fluidablaufanordnung (20) nach Anspruch 1, welche ein Bodenelement (70) für eine Batterieanordnung (12) aufweist, welches Bodenelement (70) wannenförmig ist und eine Ablaufschräge (72) für ein Kühlmittel (14) aufweist, und welche Ablaufschräge (72) in Fluidverbindung mit der Sammelkammer (32) steht, um einen Ablauf eines Kühlmittels (14) von der Batterieanordnung (12) zur Sammelkammer (32) zu ermöglichen.

3. Fluidablaufanordnung (20) nach Anspruch 2, bei welcher die Ablaufschräge (72) über einen Schlauch (38) in Fluidverbindung mit der Sammelkammer (32) steht.

4. Fluidablaufanordnung (20) nach Anspruch 3, bei welcher der Schlauch (38) über mindestens eine Schelle (54, 55) befestigt ist.

5. Fluidablaufanordnung (20) nach einem der vorhergehenden Ansprüche, welche ein Labyrinthkammerteil (61) und ein Deckelteil (62) aufweist, welches Labyrinthkammerteil (61) die Labyrinthkammer (34) ausbildet, welches Deckelteil (62) in einem Deckelteilfortsatz (64) die Sammelkammer (32) ausbildet, und welches Deckelteil (62) mit dem Labyrinthkammerteil (61) verbunden ist.

6. Fluidablaufanordnung (20) nach Anspruch 5, bei welcher ein Dichtelement (42) zwischen dem Labyrinthkammerteil (61) und dem Deckelteil (62) vorgesehen ist.

7. Fluidablaufanordnung (20) nach einem der vorhergehenden Ansprüche, bei welcher die Labyrinthkammer (34) eine Seitenwand (65), einen Labyrinthinnenraum (67) und Formelemente (66) aufweist, welche Formelemente (66) sich von der Seitenwand (65) in den Labyrinthinnenraum hinein erstrecken, um einen geradlinigen Durchfluss eines Fluids durch die Labyrinthkammer (34) zu verhindern oder zumindest zu verringern.

8. Fluidablaufanordnung (20) nach Anspruch 7, bei welcher sich die Formelemente (66) zumindest teilweise zumindest abschnittsweise bei ihrer Erstreckung von der Seitenwand (65) in den Labyrinthinnenraum (67) hinein dem Fluidauslass (36) annähern.

9. Fluidablaufanordnung (20) nach Anspruch 7 oder 8, bei welcher die Formelemente (66) zumindest teilweise zumindest abschnittsweise flächig ausgebildet sind.

10. Batterieanordnung (12), welche eine Fluidablaufanordnung (20) nach einem der vorhergehenden Ansprüche aufweist.

11. Fahrzeug (10), welches eine Batterieanordnung (12) nach Anspruch 10 aufweist.

12. Fahrzeug (10) nach Anspruch 11, bei welcher der Fluidauslass (36) in Fluidverbindung mit der Umgebung (18) des Fahrzeugs (10) steht, um einen Ablauf eines Kühlmittels (14) in die Umgebung des Fahrzeugs (10) zu ermöglichen.

13. Fahrzeug (10) nach Anspruch 11 oder 12, bei welchem die Sammelkammer (32) zumindest bereichsweise oberhalb der Labyrinthkammer (34) angeordnet ist, um einen Ablauf des Kühlmittels (14) in einem Schadensfall zu erleichtern.

## Claims

1. A fluid drainage assembly (20) for a battery assembly (12), which fluid drainage assembly (20) comprises a fluid inlet (31), a collection chamber (32), a membrane (40), a labyrinth chamber (34), and a fluid outlet (36), which membrane (40) is provided between the collection chamber (32) and the labyrinth chamber (34) and has a closed state (Z1) and an opened state (Z2), and which membrane (40) is configured such that, in the closed state (Z1), it collects in the collection chamber (32) a coolant (14) that enters the collection chamber (32) via the fluid inlet (31) until the membrane (40) transitions from the closed state (Z1) into the opened state (Z2) at a specified first differential pressure between a side (51) of the membrane (40) associated with the collection chamber (32) and a side (52) of the membrane (40) associated with the labyrinth chamber (34), allowing a drainage of the coolant (14) through the labyrinth chamber (34) to the fluid outlet (36), **characterised in that** the membrane (40) is configured such that, after transitioning from the closed state (Z1) into the opened state (Z2), it no longer transitions into the closed state (Z1), wherein this is achieved by destruction of the membrane.

2. The fluid drainage assembly (20) according to claim 1, comprising a floor element (70) for a battery assembly (12), which floor element (70) is trough-shaped and comprises a drainage slope (72) for a coolant (14), and which drainage slope (72) is fluidically connected to the collection chamber (32) in order to allow a coolant (14) to drain from the battery assembly (12) to the collection chamber (32).

3. The fluid drainage assembly (20) according to claim 2, wherein the drainage slope (72) is fluidically connected to the collection chamber (32) via a hose (38).

4. The fluid drainage assembly (20) according to claim 3, wherein the hose (38) is fixed via at least one clamp (54, 55).

5. The fluid drainage assembly (20) according to any one of the preceding claims, comprising a labyrinth chamber portion (61) and a lid portion (62), which labyrinth chamber portion (61) forms the labyrinth chamber (34), which lid portion (62) forms the collection chamber (32) in a lid portion extension (64), and which lid portion (62) is connected to the labyrinth chamber portion (61).

6. The fluid drainage assembly (20) according to claim 5, wherein a sealing element (42) is provided between the labyrinth chamber portion (61) and the lid portion (62).

7. The fluid drainage assembly (20) according to any one of the preceding claims, wherein the labyrinth chamber (34) comprises a sidewall (65), a labyrinth interior space (67), and forming elements (66), which forming elements (66) extend from the sidewall (65) into the labyrinth interior space in order to prevent or at least reduce a straight-line flow of a fluid through the labyrinth chamber (34).

8. The fluid drainage assembly (20) according to claim 7, in which at least some of the forming elements (66) at least partially approach the fluid outlet (36) in their extension from the sidewall (65) into the labyrinth interior space (67).

9. The fluid drainage assembly (20) according to claim 7 or 8, wherein the forming elements (66) are at least partially laminar in form, at least in sections.

10. A battery assembly (12) comprising a fluid drainage assembly (20) according to any one of the preceding claims.

11. A vehicle (10) comprising a battery assembly (12) according to claim 10.

12. The vehicle (10) according to claim 11, wherein the fluid outlet (36) is fluidically connected to the surroundings (18) of the vehicle (10) in order to allow a coolant (14) to drain into the surroundings of the vehicle (10).

13. The vehicle (10) according to claim 11 or 12, in which the collection chamber (32) is arranged at least in regions above the labyrinth chamber (34) so as to facilitate a drainage of the coolant (14) in a damage event.

## Revendications

1. Ensemble d'évacuation de fluide (20) pour un ensemble batterie (12), lequel ensemble d'évacuation de fluide (20) comprend une entrée de fluide (31), unechambre de collecte (32), une membrane (40), une chambre à labyrinthe (34) et une sortie de fluide (36), laquelle membrane (40) est prévue entre la chambre de collecte (32) et la chambre à labyrinthe (34) et a un état fermé (Z1) et un état ouvert (Z2), et laquelle membrane (40) est configurée de telle sorte que, dans l'état fermé (Z1), elle collecte dans la chambre de collecte (32) un liquide de refroidissement (14) qui entre dans la chambre de collecte (32) via l'entrée de fluide (31) jusqu'à ce que la membrane (40) passe de l'état fermé (Z1) à l'état ouvert (Z2) à une première pression différentielle spécifiée entre un côté (51) de la membrane (40) associé à la chambre de collecte (32) et un côté (52) de la membrane (40) associé à la chambre à labyrinthe (34), permettant l'évacuation du liquide de refroidissement (14) à travers la chambre à labyrinthe (34) vers la sortie de fluide (36), **caractérisé en ce que** la membrane (40) est configurée de telle sorte que, après le passage de l'état fermé (Z1) à l'état ouvert (Z2), elle ne passe plus à l'état fermé (21), dans lequel cela est obtenu par destruction de la membrane.

2. Ensemble d'évacuation de fluide (20) selon la revendication 1, comprenant un élément de plancher (70) pour un ensemble batterie (12), lequel élément de plancher (70) est en forme d'auge et comprend une pente d'évacuation (72) pour un liquide de refroidissement (14), et laquelle pente d'évacuation (72) est en communication fluidique avec la chambre de collecte (32) afin de permettre à un liquide de refroidissement (14) de s'évacuer de l'ensemble batterie (12) vers la chambre de collecte (32).

3. Ensemble d'évacuation de fluide (20) selon la revendication 2, dans lequel la pente d'évacuation (72) est en communication fluidique avec la chambre de collecte (32) via un tuyau (38).

4. Ensemble d'évacuation de fluide (20) selon la revendication 3, dans lequel le tuyau (38) est fixé par l'intermédiaire d'au moins une pince (54, 55).

5. Ensemble d'évacuation de fluide (20) selon l'une quelconque des revendications précédentes, comprenant une portion de chambre à labyrinthe (61) et une portion de couvercle (62), laquelle portion de chambre à labyrinthe (61) forme la chambre à labyrinthe (34), laquelle portion de couvercle (62) forme la chambre de collecte (32) dans une extension de portion de couvercle (64), et laquelle portion de couvercle (62) est reliée à la portion de chambre à labyrinthe (61).

6. Ensemble d'évacuation de fluide (20) selon la revendication 5, dans lequel un élément d'étanchéité (42) est prévu entre la portion de chambre à labyrinthe (61) et la portion de couvercle (62).

7. Ensemble d'évacuation de fluide (20) selon l'une quelconque des revendications précédentes, dans lequel la chambre à labyrinthe (34) comprend une paroi latérale (65), un espace intérieur de labyrinthe (67) et des éléments de formation (66), lesquels éléments de formation (66) s'étendent depuis la paroi latérale (65) dans l'espace intérieur de labyrinthe afin d'empêcher ou au moins de réduire un écoulement rectiligne d'un fluide à travers la chambre à labyrinthe (34).

8. Ensemble d'évacuation de fluide (20) selon la revendication 7, dans lequel au moins certains des éléments de formation (66) s'approchent au moins partiellement de la sortie de fluide (36) dans leur extension depuis la paroi latérale (65) jusque dans l'espace intérieur en labyrinthe (67).

9. Ensemble d'évacuation de fluide (20) selon la revendication 7 ou 8, dans lequel les éléments de formation (66) sont au moins partiellement de forme lamellaire, au moins par sections.

10. Ensemble batterie (12) comprenant un ensemble d'évacuation de fluide (20) selon l'une quelconque des revendications précédentes.

11. Véhicule (10) comprenant un ensemble batterie (12) selon la revendication 10.

12. Véhicule (10) selon la revendication 11, dans lequel la sortie de fluide (36) est en communication fluidique avec l'environnement (18) du véhicule (10) afin de permettre à un liquide de refroidissement (14) de s'évacuer jusque dans l'environnement du véhicule (10).

13. Véhicule (10) selon la revendication 11 ou 12, dans lequel la chambre de collecte (32) est agencée au moins dans des régions au-dessus de la chambre à labyrinthe (34) de manière à faciliter une évacuation du liquide de refroidissement (14) en cas d'endommagement.
